# DEMANDE DE BREVET EUROPEEN

(11) **EP 2 230 411 A1**
(43) Date de publication de la demande: **22.09.2010**
(21) Numéro de dépôt: 10358002.3
(22) Date de dépôt: 12.03.2010
(51) Int. Cl.: F16B 39/32

(54) **Système d'écrou de sécurité**

(30) Priorité: 13.03.2009 FR 0901162
(71) Demandeur: Orttner, Patrick, 04700 Lurs (FR)
(72) Inventeur: Orttner, Patrick, 04700 Lurs (FR)
(74) Mandataire: Roman, Alexis

(57) **Abrégé**

Système d'écrou de sécurité comportant un écrou freiné (A) et son support rainuré (B), un ou plusieurs cliquets (2) permettant, en position d'utilisation, le blocage de l'écrou sur son support, chaque cliquet étant monté dans un logement crée dans l'écrou pour son insertion et étant maintenu par un axe (3) afin de pouvoir pivoter librement, **caractérisé en ce que** chaque cliquet (2) est maintenu en pression par un ressort (4) qui lui est propre,
et en ce que le support est muni de rainures (6) pouvant recevoir l'extrémité bloquante du cliquet (2) grâce à la pression exercée sur ce dernier par le ressort (4), lesdites rainures étant réalisées sur toute la longueur du support (B).

## Description

### Domaine technique de l'invention.

L'invention concerne un écrou freiné grâce à l'adjonction d'un cliquet d'arrêt monté à l'aide d'un axe et assisté par un ressort à l'intérieur d'un logement créé spécialement dans l'écrou.

L'invention concerne également, soit un goujon soit un boulon en fonction de l'utilisation faite du système, dans lequel des cannelures sont réalisées afin de pouvoir bloquer le cliquet.

### État de la technique.

De nombreux véhicules (VL & PL) sont amenés à perdre une roue suite à divers incidents techniques : roues mal resserrées au montage, encrassement de la jante qui empêche un serrage optimal, etc.

Afin de résoudre ce problème, source d'accidents matériels et corporels importante, peu ou pas de solutions technique ont été présentées à ce jour. On peut citer ici les écrous Nylstop®, mais leur utilisation est contraignante et mal adaptée dans certains cas, leur démontage rendant obligatoire l'échange après utilisation.

On connait également par le document US 6.206.625 (DESSOUROUX) un système d'écrou de sécurité comportant un écrou freiné et son support rainuré. Un ou plusieurs cliquets permettant, en position d'utilisation, le blocage de l'écrou sur son support, chaque cliquet étant monté dans un logement crée dans l'écrou pour son insertion et étant maintenu par un axe afin de pouvoir pivoter librement. Un unique ressort torique permet de maintenir en pression l'ensemble des cliquets. La partie rainurée est uniquement prévu à une extrémité du support. L'emploi simultané de ces deux composants (écrou bloquant et support rainuré) permet à l'écrou de ne plus se dévisser intempestivement, éradiquant ainsi tout risque d'accident ou d'effet indésirable.
Dans ce système, si l'unique ressort torique venait à céder, le blocage de l'écrou ne serait plus assuré. En outre un serrage optimal n'est assuré que si l'écrou est positionné au niveau de l'extrémité rainurée du support. En cas d'usure de la pièce à serrer, l'écrou peut dépasser la portion rainurée, le blocage n'étant de fait plus garanti.

Face à cet état des choses, l'objectif principal que vise à atteindre l'invention est d'améliorer les performances et la fiabilité des systèmes du type décrit dans le document US 6.206.625 (DESSOUROUX).

### Divulgation de l'invention.

La solution proposée par l'invention est un écrou et son support autobloquants pouvant être montés et démontés de nombreuses fois tout en étant réutilisés et en améliorant ainsi la sécurité et la fiabilité d'utilisation. Le système comporte un écrou freiné et son support (goujon ou boulon) rainuré, un ou plusieurs cliquets permettant, en position d'utilisation, le blocage de l'écrou sur son support, chaque cliquet étant monté dans un logement crée dans l'écrou pour son insertion et étant maintenu par un axe afin de pouvoir pivoter librement. Ce système est remarquable en ce que :
- chaque cliquet est maintenu en pression par un ressort qui lui est propre,
- le support est muni de rainures pouvant recevoir l'extrémité bloquante du cliquet grâce à la pression exercée sur ce dernier par le ressort, lesdites rainures étant réalisées sur toute la longueur du support.

L'utilisation d'un ressort indépendant pour chaque cliquet améliore la fiabilité du système. En effet, si un des ressorts venait à céder, les autres cliquets continueraient à assurer le blocage de l'écrou. En outre, la réalisation de rainures sur toute la longueur du support, permet de bloquer l'écrou quelle que soit sa position sur ledit support. Ceci assure par exemple un serrage optimal d'une roue de véhicule, quel que soit l'état d'usure de cette dernière.

Des logements spécifiques sont avantageusement créés dans l'écrou afin de recevoir les cliquets, les ressorts, et les goupilles servant d'axes.

Le support est préférentiellement usiné d'un nombre de rainures d'un minimum de huit permettant un encliquetage selon un angle maximum de 45° afin de rendre le système le plus précis possible.

En pratique, l'introduction d'une clef à pipe qui vient en appui sur l'extrémité saillante des cliquets, permet de les déverrouiller.

Selon une autre caractéristique préférée de l'invention, la partie « haute » des cliquets ne dépassent pas l'extrémité supérieure des logements réalisés dans l'écrou et permettant de recevoir lesdits cliquets, leur axe et leur ressort de rappel. De cette façon, il n'est pas possible de déverrouiller accidentellement ou de manière malveillante le système objet de l'invention, seule l'utilisation d'un outil spécifique permettant ce déverrouillage.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :

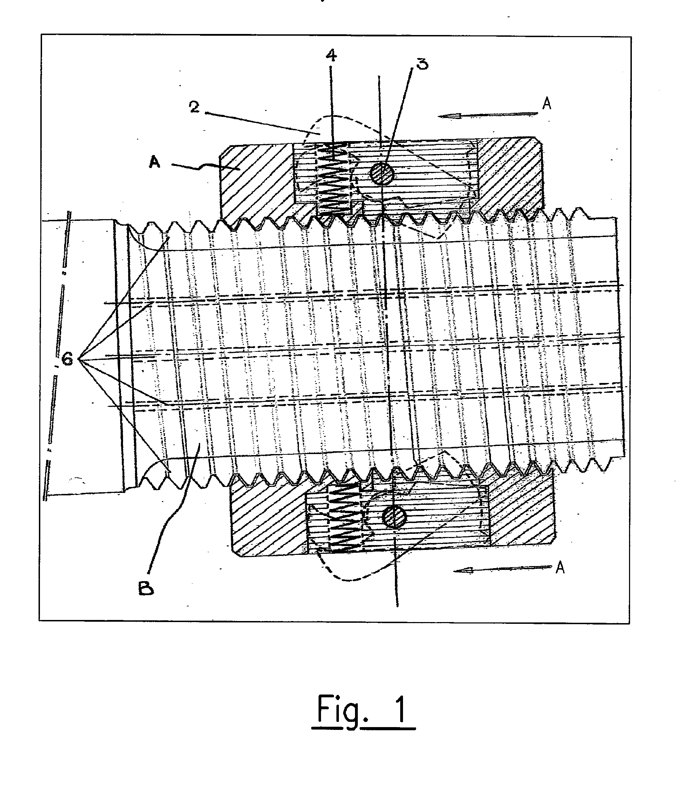

- la figure 1 est une représentation schématique d'un premier mode de réalisation du système selon l'invention,
- la figure 2 est une coupe selon A-A du système de la figure 1,
- la figure 3 représente un cliquet, percé aux environs du centre afin de recevoir l'axe qui assure son maintien dans le logement créé à son effet dans l'écrou tout en lui laissant la liberté de pivoter sous la pression du ressort,
- la figure 4 est une représentation schématique d'un second mode de réalisation du système selon l'invention, la clef à pipe servant à déverrouiller les cliquets n'étant pas positionnés sur l'écrou,
- la figure 5 est une représentation schématique du second mode de réalisation du système selon la figure 4, et où la clef à pipe est positionnée sur ledit écrou,
- la figure 6 est une vue agrandie du détail D de la figure 4,
- la figure 7 est une vue en coupe selon B-B du système représenté sur la figure 4.

### Modes de réalisation de l'invention.

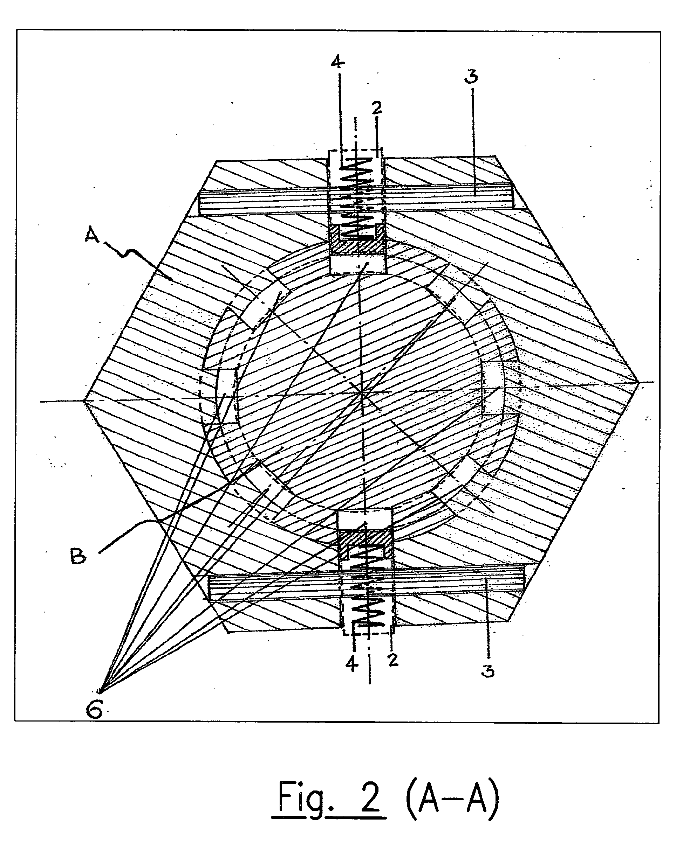

En se rapportant à la figure 2, l'écrou de sécurité (A) est composé de cliquets (2) qui sont maintenu à l'aide d'un axe (3) (par exemple : goupille fendue), de façon à pouvoir basculer librement dans un logement créé à cet effet à l'intérieur de l'écrou après retrait de la clef, et qui grâce à la pression d'un ressort (4), viennent s'insérer dans les rainures (6) pratiquées dans le support (B).

En se rapportant à la figure 2, le support (B) est un goujon (ou boulon en fonction de l'utilisation) d'un diamètre et d'un pas adapté à l'écrou utilisé (A) et dans lequel sont usinées des rainures (6) d'une largeur très légèrement supérieure à la largeur du cliquet (2) de manière à permettre à ce dernier de s'y insérer facilement. Conformément à l'invention, les rainures (6) sont réalisées sur toute la longueur du support (B). Le nombre idéal (mais non indispensable) de rainures (6) serait de huit, de façon à créer un angle maximum entre axes de 45°. Cela permet, une fois l'écrou (A) vissé à fond, de le débloquer légèrement et permettre ainsi aux cliquets (2) de basculer au fond des rainures (6) les plus proches, sans excéder un déblocage supérieur à un maximum de 1/8 de tour.

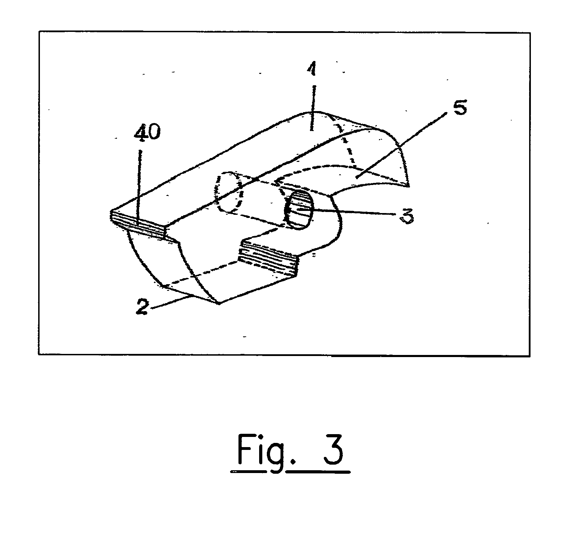

En se rapportant à la figure 3, le cliquet (2), pièce maîtresse du système, est composé en partie « haute » d'une zone légèrement arrondie (1) qui lui permettra de s'éclipser aisément lors de l'introduction de la clef en libérant la partie (2) en contrainte en fond de rainure (6). En un endroit quasiment central, mais déterminé en fonction de son utilisation, un perçage est réalisé afin de permettre la mise en place d'un axe (3) qui rendra le cliquet (2) solidaire de l'écrou (A). En partie « avant » (40) (côté du blocage) du cliquet (2), un épaulement saillant empêche ledit cliquet de sortir de son logement lors d'un démontage total en évitant ainsi que le ressort (4) puisse s'échapper. En partie « arrière » (côté bascule) du cliquet (2), on aura pris soin de créer un emplacement adapté (5) qui permet de recevoir une des extrémités du ressort de rappel (4) afin d'en assurer un maintien stable, l'autre extrémité du ressort étant quand à elle maintenu selon le même principe dans le logement prévu à cet effet dans l'écrou (A).

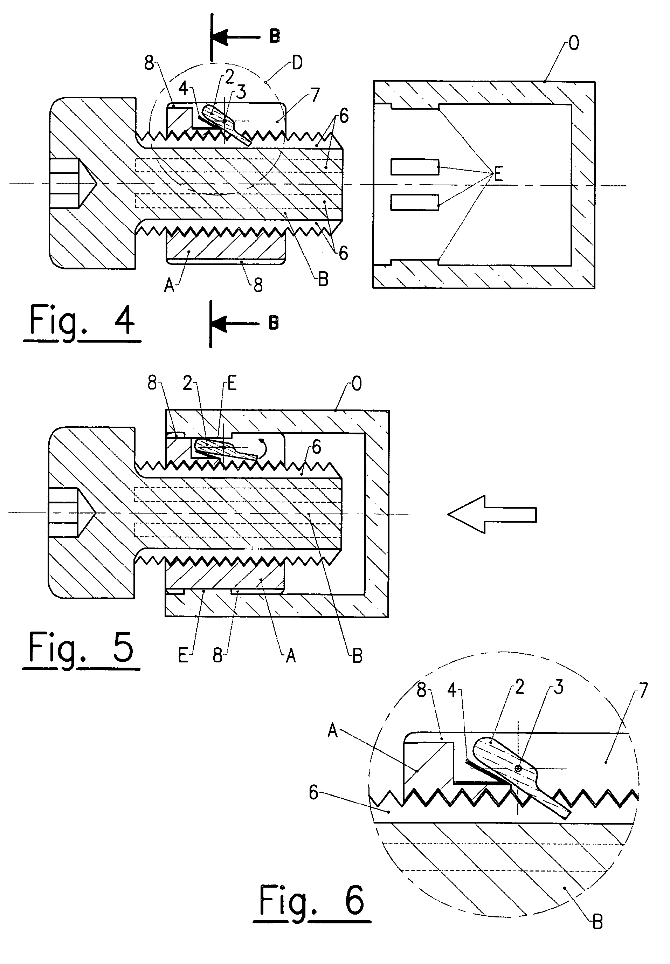

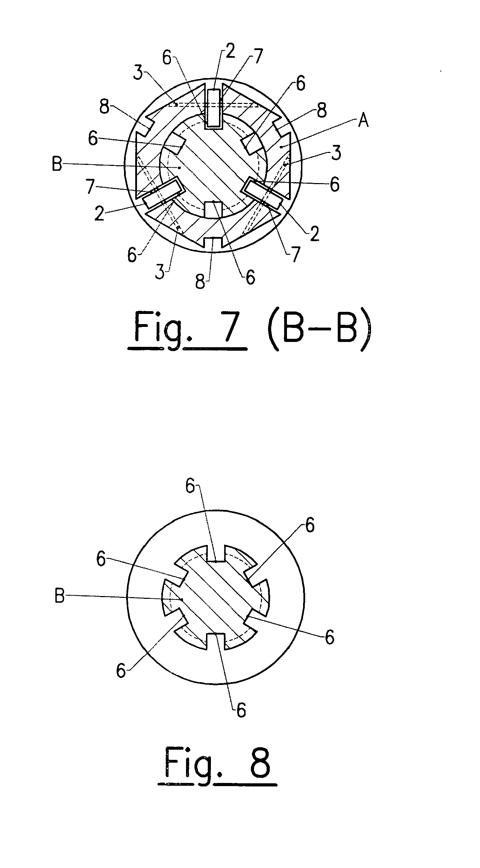

Les figures 4 à 8 schématisent un second mode de réalisation dans lequel la partie « haute » des cliquets (2) ne dépassent pas l'extrémité supérieure des logements (7) réalisés dans l'écrou (A) et permettant de recevoir lesdits cliquets, leur axe (3) et leur ressort de rappel (4). Cette configuration rend impossible toute manipulation des cliquets (2) sauf à utiliser un outil spécifique (O) prévu à cet effet. En pratique, cet outil (0) est une clé à pipe permettant le visage de l'écrou (A) et comportant sur sa surface interne des encoches (E) permettant de débloquer les cliquets (2). L'écrou (A) est également muni de rainures complémentaires (8) permettant le passage des encoches (E) lorsque l'outil (O) est positionné sur ledit écrou. Préférentiellement, l'outil (O) comporte autant d'encoches (E) qu'il y a de rainures (6) dans le support (B) de façon à pouvoir facilement débloquer les cliquets (2) quelle que soit la position dudit outil sur l'écrou (A). En se rapportant plus particulièrement à la figure 5, lorsque l'outil (O) est positionné sur l'écrou (A), les encoches (E) s'engagent dans les rainures complémentaires (8) et viennent en appui contre la partie « haute » des cliquets (2). Ces derniers sont alors aptes à pivoter autour de leur axe (3) de façon à se désengager des rainures (6) et débloquer le système. Dans ce mode de réalisation, le ressort (4) peut consister en une lame ressort en forme de « V » prenant appui contre la partie « arrière » des cliquets (2).

Une application préférée de l'invention concerne l'utilisation sur des véhicules routiers. Cependant, il est possible de l'adapter à d'autres utilisations telles que la mécanique, l'avionique, et généralement tous domaines nécessitant une sécurité accrue et un besoin absolu de fiabilité.

La fabrication de l'invention n'est pas limitée à l'utilisation de l'acier, et peut être déclinée dans tous types de matériaux utilisables pour la fabrication d'écrous et supports de ce type tels que bois, plastiques, métaux non ferreux, etc.

Comme vu lors de la description de l'invention, le support rainuré n'est pas limité aux seuls goujons et boulons, mais peut être constitué par tout support d'autre nature dès lors qu'il est fileté au même pas que l'écrou utilisé, et que des rainures y ont bien été pratiquées (ex : tiges filetées).

## Revendications

1. Système d'écrou de sécurité comportant un écrou freiné (A) et son support rainuré (B), un ou plusieurs cliquets (2) permettant, en position d'utilisation, le blocage de l'écrou sur son support, chaque cliquet étant monté dans un logement crée dans l'écrou pour son insertion et étant maintenu par un axe (3) afin de pouvoir pivoter librement,
**caractérisé en ce que** chaque cliquet (2) est maintenu en pression par un ressort (4) qui lui est propre, et **en ce que** le support est muni de rainures (6) pouvant recevoir l'extrémité bloquante du cliquet (2) grâce à la pression exercée sur ce dernier par le ressort (4), lesdites rainures étant réalisées sur toute la longueur du support (B)

2. Système selon la revendication 1, **caractérisé par le fait que** des logements spécifiques sont créés dans l'écrou afin de recevoir les cliquets (2), les ressorts (4), et les goupilles servant d'axes (3).

3. Système selon la revendication 1, **caractérisé en ce que** le support est usiné d'un nombre de rainures d'un minimum de huit permettant un encliquetage selon un angle maximum de 45° afin de rendre le système le plus précis possible.

4. Système selon la revendication 1, **caractérisé en ce que** l'introduction d'une clef à pipe qui vient en appui sur l'extrémité saillante des cliquets (2), permet ainsi de les déverrouiller.

5. Système selon la revendication 1, **caractérisé en ce que** la partie « haute » des cliquets (2) ne dépassent pas l'extrémité supérieure des logements (7) réalisés dans l'écrou (A) et permettant de recevoir lesdits cliquets, leur axe (3) et leur ressort de rappel (4).
